# FASCICULE DE BREVET EUROPEEN

(11) **EP 0 538 930 B1**
(45) Date de publication et mention de la délivrance du brevet: **08.01.1997**
(21) Numéro de dépôt: 92203063.0
(22) Date de dépôt: 06.10.1992
(51) Int. Cl.: G01P 5/00, G01F 1/66

(54) **Dispositif de mesure de la vitesse d'un fluide**
Vorrichtung zum Messen der Geschwindigkeit eines fliessfähigen Mediums
Apparatus for measuring the speed of a flowable medium

(30) Priorité: 25.10.1991 FR 9113299
(43) Date de publication de la demande: 28.04.1993
(73) Titulaire: SCHLUMBERGER INDUSTRIES, F-92120 Montrouge (FR)
(72) Inventeur: Khuri-Yakub, Butrus, Palo Alto, CA 94306 (US); Ligneul, Patrice, F-92370 Chaville (FR); Boulanger, Jean-Luc, I-36100 Vicenza (IT)
(74) Mandataire: Dupont, Henri

(56) Documents cités:
- WO-A-86/02723
- WO-A-91/14925
- US-A- 3 729 993
- US-A- 4 555 951

## Description

La présente invention a pour objet un dispositif de mesure de la vitesse d'un fluide; ce dispositif statique fonctionne sans pièce mécanique en mouvement: il s'applique notamment aux compteurs statiques de gaz.

On connait un dispositif de mesure de la vitesse d'un fluide décrit dans le document EP 0 347 096. Dans ce dispositif connu, on mesure le temps de vol d'un signal acoustique entre deux transducteurs émetteurs/récepteurs disposés aux extrémités d'une conduite cylindrique dans laquelle s'écoule le fluide.

Si l'on connaît la distance séparant les transducteurs, les mesures du temps de vol d'un signal acoustique entre le premier transducteur et le second, et celui du parcours entre le second vers le premier permettent de déterminer la vitesse du gaz dans la conduite.

Mais ce dispositif présente plusieurs inconvénients. Les ondes acoustiques dont émises par les transducteurs selon un diagramme de rayonnement en forme de cône. En dehors de celles émises sensiblement dans l'axe de la conduite, elles se réfléchissent donc sur les parois de la conduite avant d'atteindre un récepteur. Ces réflexions entraînent des différences de chemin parcouru par les ondes et donc des déphasages, en fonction de l'angle d'émission. Ces déphasages peuvent engendrer des interférences destructives au niveau du récepteur, ce qui diminue notablement l'intensité du signal détecté.

De plus la forme du diagramme de rayonnement implique que l'on augmente la surface frontale des émetteurs/récepteurs de manière à augmenter la quantité de signal reçu.
Enfin, il s'ensuit que la source d'alimentation électrique nécessaire au fonctionnement des émetteurs/récepteurs doit être puissante ce qui interdit l'utilisation d'une pile électrique usuelle pour un fonctionnement sur une longue période.

Or, pour une application à un compteur de gaz domestique, le dispositif doit pouvoir fonctionner avec une consommation électrique réduite, autorisant l'emploi d'une pile électrique usuelle comme source d'alimentation et ceci avec une durée de vie de plusieurs années.

La présente invention a pour but de pallier les inconvénients des dispositifs connus. Grâce à l'utilisation d'une chambre en forme d'ellipsoïde de révolution, les ondes ultrasonores émises par des transducteurs/émetteurs et/ou récepteurs placés aux foyers de l'ellipsoïde sont réfléchies par les parois de l'ellipsoïde et atteignent toutes le foyer opposé avec une distance parcourue identique, donc sans déphasage susceptible de diminuer l'intensité détectée.

Il existe quand même un déphasage entre les ondes émises sensiblement axialement qui atteignent le récepteur opposé sans se réfléchir sur une paroi et celles qui subissent une réflexion. Ce déphasage peut être rendu négligeable ou bien non susceptible de perturber le signal détecté en choisissant convenablement la forme de l'ellipsoïde.

On peut aussi empêcher la propagation des ondes émises sensiblement axialement en plaçant un obstacle sur leur parcours.

Par ailleurs, la quantité de signal reçue par chaque récepteur est plus importante que dans l'art antérieur puisque, les ondes réfléchies sont toutes dirigées vers les foyers de l'ellipsoïde où sont placés les émetteurs/récepteurs (mises à part, bien entendu, les ondes s'échappant par les ouvertures de la chambre de mesure nécessaires à la circulation du fluide).

Dans ces conditions, il est possible d'utiliser des émetteurs/récepteurs de plus petites dimensions que dans l'art antérieur ce qui permet de les placer dans l'écoulement de gaz sans perturber celui-ci de manière significative.

De façon plus précise, la présente invention concerne un dispositif de mesure de la vitesse d'un fluide comprenant une paire de transducteurs émetteurs et/ou récepteurs d'ultrasons et une chambre de mesure en forme d'ellipsoïde de révolution possédant une ouverture d'entrée et une ouverture de sortie et ayant une paroi réfléchissant les ultrasons, chacun des tranducteurs émetteurs et/ou récepteurs étant positionné à un foyer de l'ellipsoïde.

Dans un mode de réalisation particulier, l'ellipsoïde est tel que la somme des distances d'un point de l'ellipsoïde aux foyers moins la distance entre les foyers est sensiblement égale à un multiple entier de la longueur d'onde ultrasonore.

Selon un mode de réalisation particulier, l'entrée et la sortie de la chambre de mesure sont alignées sur le grand axe de l'ellipsoïde.

Dans une réalisation avantageuse, le dispositif comprend une chambre d'entrée en forme de tuyère convergente raccordée à une entrée de la chambre de mesure.

De manière avantageuse, le dispositif comprend une chambre de sortie en forme de tuyère divergente raccordée à une sortie de la chambre de mesure.
Selon un mode de réalisation particulier, la chambre de mesure comprend un obstacle disposé longitudinalement selon le grand axe de l'ellipsoïde de manière à rendre la distribution transversale de vitesse du fluide parcourant la chambre de mesure sensiblement constante quel que soit le débit à l'intérieur de la chambre de mesure.

Avantageusement, cet obstacle possède une forme aérodynamique à symétrie cylindrique autour du grand axe de l'ellipsoïde.

De manière préférée, l'obstacle présente une forme d'ogive ayant une section longitudinale ellipsoïdale telle que l'écartement entre la paroi de la chambre de mesure et la majeure partie de la surface de l'obstacle soit constant.

Selon un mode de réalisation particulier, l'ogive possède une extrémité effilée opposée à l'ouverture d'entrée.

En plus du fait qu'il permet d'obtenir une distribution transversale de vitesse du fluide sensiblement constante, un tel obstacle diminue les phénomènes tourbillonnaires de décollement dans la chambre de mesure et donc diminue la perte de charge.

L'obstacle augmente aussi la vitesse du fluide dans la chambre de mesure et donc permet d'améliorer la sensibilité du dispositif.

De manière préférée, l'obstacle est disposé de façon à masquer au moins chaque transducteur pour les ondes ultrasonores émises sensiblement axialement par le transducteur opposé.

On évite ainsi que les ondes ultrasonores atteignent directement le transducteur récepteur sans réflexion sur la paroi de la chambre de mesure. On élimine ainsi les éventuelles interférences pouvant apparaître entre les ondes ultrasonores se propageant directement d'un transducteur à l'autre et celles subissant une réflexion sur la paroi de la chambre de mesure.

Avantageusement, l'obstacle est maintenu en position par un support comprenant des ailettes profilées solidaires par une extrémité de la paroi de la chambre de mesure et par l'autre extrémité de l'obstacle.

Selon une variante de réalisation du dispositif conforme à l'invention, les transducteurs sont maintenus en position par des supports qui sont des tranquilliseurs pour la circulation du fluide.

Préférentiellement dans cette variante, les tranquilliseurs comprennent plusieurs ailettes régulièrement espacées, disposées perpendiculairement au grand axe de l'ellipsoïde et fixées sur la paroi de la chambre de mesure.

Avantageusement, les transducteurs sont placés dans des boîtiers de forme aérodynamique.

De manière avantageuse, le petit axe de l'ellipsoïde est sensiblement égal au diamètre de la conduite dans laquelle circule le fluide.

De manière préférée, la distance inter-foyers est comprise dans une gamme allant de 4 à 6 fois le diamètre de la conduite dans laquelle circule le fluide.

Les caractéristiques et avantages de l'invention apparaîtront mieux à la lecture de la description suivante donnée à titre illustratif et non limitatif en référence aux dessins annexés sur lesquels :
- la figure 1A représente schématiquement une coupe longitudinale d'un dispositif conforme à l'invention;
- la figure 1B représente schématiquement en coupe une variante de réalisation d'un obstacle placé dans la chambre de mesure;
- la figure 1C représente schématiquement une coupe transversale selon l'axe 1C de la figure 1 du dispositif de l'invention;
- la figure 2 représente schématiquement une coupe transversale selon l'axe II de la figure 1 d'un dispositif conforme à l'invention;
- la figure 3 représente schématiquement un montage électronique permettant la détermination de la vitesse d'un fluide à partir de la mesure effectuée par un dispositif conforme à l'invention.

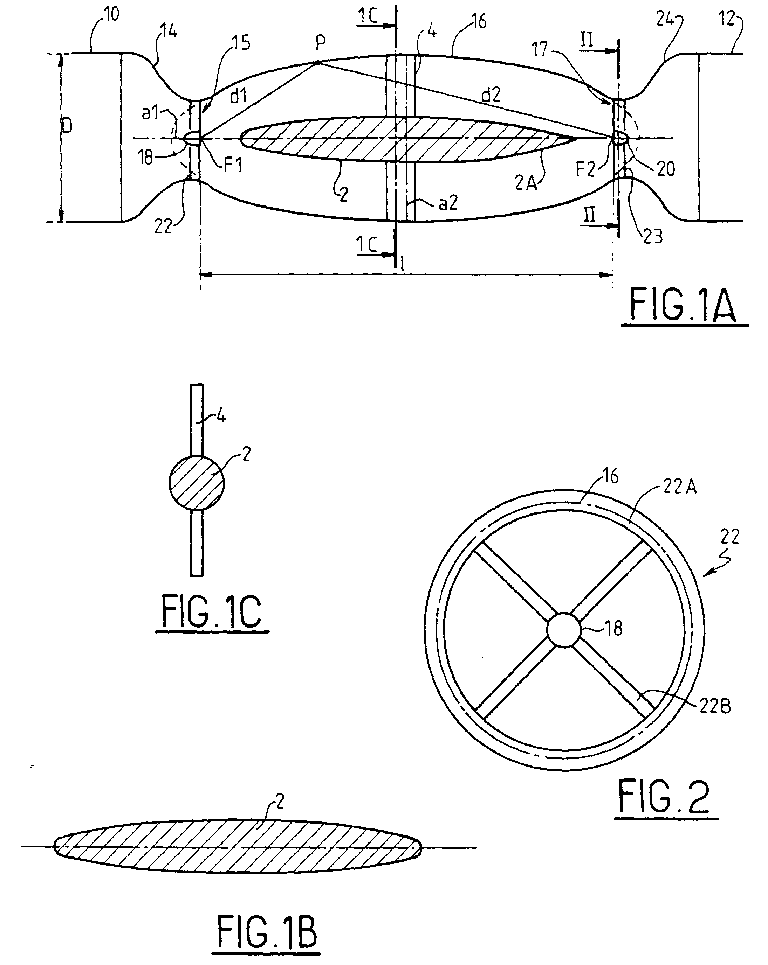

En référence à la figure 1, on décrit maintenant un dispositif conforme à l'invention relié à une conduite d'arrivée 10 cylindrique dans laquelle circule le fluide, par exemple du gaz et à une conduite de sortie 12, elle aussi cylindrique. Ces conduites 10,12 possèdent un diamètre D.

Dans la réalisation représentée sur la figure 1A, le dispositif de l'invention comprend une chambre d'entrée cylindrique 14 en forme de tuyère convergente de diamètre d'entrée égal à D et de diamètre de sortie égal par exemple à D/2. La chambre d'entrée est raccordée par sa grande ouverture à la conduite d'arrivée 10 et par sa petite ouverture à l'entrée d'une chambre de mesure 16.

La chambre de mesure 16 possède une forme en ellipsoïde ayant un grand axe a1 et un petit axe a2. L'entrée 15 et la sortie 17 de la chambre de mesure 16 sont alignées sur le grand axe a1. Le petit axe a2 est avantageusement égal à D, diamètre de la conduite d'arrivée.

L'ellipsoïde est choisi tel que la distance inter-foyers l soit comprise dans une gamme allant de 4 à 6 fois D ; par exemple, on choisit l égale à 5D.

La chambre de mesure 16 possède une paroi interne réfléchissant les ultrasons.

Deux transducteurs, émetteurs/récepteurs d'ultrasons 18,20 sont placés aux foyers F1 et F2 de l'ellipsoïde avec leur face active en regard.

Ces transducteurs 18,20 sont par exemple en céramique piezoélectrique (par exemple PZT) comprenant une couche d'adaptation d'impédance (par exemple caoutchouc RTV).

Les transducteurs 18,20 possèdent un diamètre d'environ (0.1)D. Placés dans l'écoulement du fluide, ils n'engendrent que peu de perturbations dans l'écoulement grâce à leur faible encombrement. Afin de réduire encore ces perturbations, les transducteurs 18,20 sont enchâssés dans un boîtier de forme aérodynamique.

Les transducteurs 18,20 sont maintenus en position grâce à des supports 22,23 fixés à la paroi de la chambre de mesure 16 dans l'exemple représenté figure 1A.

Dans l'exemple décrit et représenté sur la figure 1A, les supports 22 et 23 sont aussi des tranquilliseurs pour l'écoulement du fluide, c'est-à-dire qu'ils permettent l'élimination des mouvements tourbillonnaires du fluide et l'égalisation de la distribution de vitesse transversalement à l'écoulement du fluide.

La figure 2 représente une coupe selon Il d'un dispositif représenté sur la figure 1A. On peut voir que le support 22 comprend un anneau 22A fixé à la paroi intérieure de la chambre de mesure 16. Quatre ailettes radiales 22B, régulièrement réparties sur la circonférence de l'anneau 22A se rejoignent pour maintenir le transducteur 18.

Le support 23 est identique au support 22. On peut voir sur la figure lA que la sortie 17 de la chambre de mesure 16 est reliée à une chambre de sortie 24 en forme de tuyère divergente. Cette chambre de sortie 24, symétrique de la chambre d'entrée 14 est reliée à la conduite de sortie 12.

La chambre de mesure 16 comprend un obstacle 2 disposé longitudinalement selon le grand axe a1 de l'ellipsoïde de manière à rendre la distribution transversale de vitesse du fluide parcourant la chambre de mesure sensiblement constante quel que soit le débit à l'intérieur de la chambre de mesure. L'obstacle peut être en matériau absorbant les ondes ultrasonores, par exemple du polyuréthane ou tout autre matériau équivalent. De cette manière, on évite les réflexions parasites des ondes sur l'obstacle.

L'obstacle 2 possède une forme aérodynamique à symétrie cylindrique autour du grand axe a1 de l'ellipsoïde. Comme on peut le voir sur la figure 1A, il présente une forme d'ogive ayant une section longitudinale ellipsoïdale telle que l'écartement entre la paroi de la chambre de mesure 16 et la majeure partie de la surface de l'obstacle 2 soit constant. Dans l'exemple de réalisation de la figure 1A, l'ogive possède une extrémité effilée 2A opposée à l'ouverture d'entrée 15.

Sur la figure 1B représentant schématiquement une coupe longitudinale de l'obstacle 2 dans une variante, on voit que la section de l'obstacle peut être complètement ellipsoïdale, c'est-à-dire symétrique par rapport à son petit axe.

L'obstacle 2 est maintenu en position par un support 4 composé d'ailettes profilées solidaires à leurs extrémités de la paroi de la chambre 16 d'une part, et de l'obstacle 2 d'autre part.

La figure 1C représente schématiquement une coupe transversale du dispositif selon l'axe 1C qui donne une vue de face de l'ensemble obstacle 2 et support 4.

Ces ailettes profilées, au nombre de deux sur la figure 1C mais qui peuvent être plus nombreuses, remplissent une fonction de tranquilliseur pour le fluide traversant la chambre 16.

A nouveau sur la figure 1A, on voit que l'obstacle 2 est disposé de manière à masquer les ondes ultrasonores émises par l'un ou l'autre des transducteurs 18,20 et se propageant sensiblement axialement. On évite ainsi toute propagation directe d'un transducteur à l'autre, les seules ondes ultrasonores utiles étant celles subissant une réflexion sur la paroi de la chambre 16.
En fonctionnement, le fluide circule à travers le dispositif en provenance de la conduite d'arrivée 10 vers la conduite de sortie 12.

Le passage du fluide par la chambre d'entrée 14 en forme de tuyère convergente permet d'augmenter la vitesse du fluide de manière connue par rapport à sa vitesse d'arrivée. De cette manière on améliore aussi la qualité de l'écoulement.

L'obstacle 2 permet d'obtenir un profil transversal de vitesse constant quelle que soit la vitesse du fluide, la qualité de l'écoulement étant encore améliorée par les tranquilliseurs.

Chacun des transducteurs 18,20 émet une onde ultrasonore de fréquence comprise dans une gamme allant de 0.2 à 1 MHz en direction du transducteur opposé. Les surfaces frontales d'émission sont placées aux foyers F1 et F2 de l'ellipsoïde. Or, on sait que la somme des distances d1 et d2 des foyers à un point P quelconque de l'ellipsoïde est constante.

L'émission due à un transducteur s'effectuant dans un cône, toutes les ondes subissant une réflexion sur la paroi de l'ellipsoïde avant d'atteindre le transducteur opposé parcourent la même distance.

Les ondes émises sensiblement selon le grand axe a1 de l'ellipsoïde, ne subissent pas de réflexion avant d'atteindre le transducteur opposé. De ce fait, il existe un déphasage entre ces ondes et celles qui ont subi une réflexion sur la paroi de l'ellipsoïde. Mais le déphasage peut être contrôlé de manière à ne pas créer d'interférence destructive. La valeur du déphasage dépend des paramètres de l'ellipsoïde: on choisit ceux-ci de manière à ce que la somme des distances dl, d2 moins la distance I inter-foyers soit sensiblement égale à un multiple entier de la longeur d'onde ultrasonore.

On sait que la longeur d'onde dépend de la célérité du son et de la fréquence. Si les conditions d'utilisation varient, la célérité varie et donc la longeur d'onde varie. On peut jouer sur la fréquence pour prendre en compte les variations de la célérité et retrouver un multiple entier de la longueur d'onde. Pour cela, on peut utiliser une technique de variation de la fréquence connue en soi, par exemple la technique dite boucle de verrouillage de longueur d'onde (lambda locked loop en terminologie anglo saxonne).

Toutefois, si comme dans l'exemple représenté figure lA la chambre 16 comprend un obstacle 2 qui empêche toute propagation axiale pour les ondes ultrasonores, le respect de cette condition est inutile.

La vitesse du gaz dans la chambre de mesure est une fonction de la distance I inter-foyers et des durées nécessaires pour qu'une onde émise par un transducteur atteigne l'autre, dans le sens de propagation du fluide et en sens inverse. Cette vitesse est déterminée de manière sensiblement analogue au calcul effectué dans l'art antérieur.

Des caractéristiques géométriques de la chambre de mesure 16 et de la détermination de la vitesse d'écoulement, on peut déduire une estimation du débit.

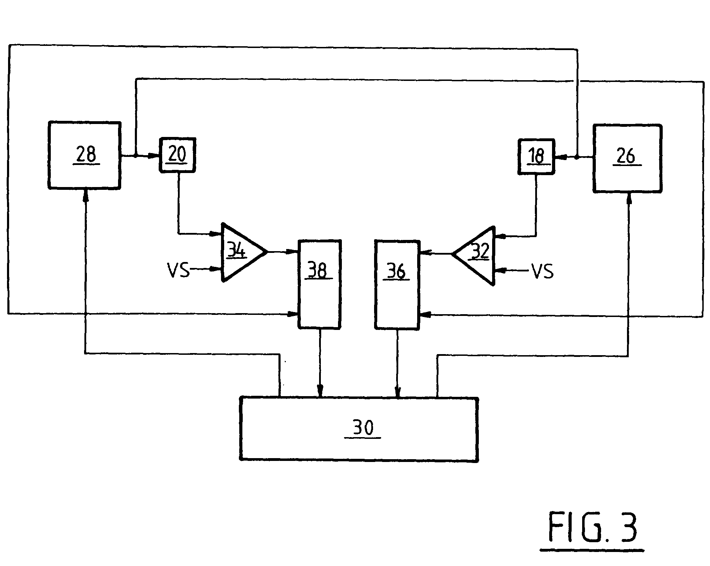

La figure 3 représente schématiquement un dispositif électronique permettant la détermination de la vitesse d'écoulement du fluide. Plusieurs procédés connus peuvent être utilisés pour déterminer la vitesse d'écoulement du fluide : mesure de phase, temps de vol, mesure de fréquence en bouclant les transducteurs dans un montage en oscillateur ou autres.
La description suivante se rapporte à un montage de principe pour la mesure de temps de vol. Les transducteurs 18,20 sont reliés à des générateurs d'impulsions respectivement référencés 26,28 commandés alternativement par des moyens de commande, par exemple un microprocesseur 30 muni de ses périphériques usuels.

Chaque transducteur 18,20 est connecté à un amplificateur à seuil 32,34 dont le seuil de déclenchement VS est déterminé selon les conditions d'opération. Les amplificateurs à seuil 32, 34 sont chacun reliés à un compteur 36, 38. Les compteurs sont reliés en sortie à des moyens de calcul, par exemple le microprocesseur 30.

Sous la commande du microprocesseur 30, le transducteur 18 est excité durant l'impulsion engendrée par le générateur d'impulsion 26. Il délivre donc une impulsion ultrasonore en direction du transducteur 20. Par ailleurs, le générateur d'impulsion 26 est connecté à une entrée du compteur 38 qui est déclenché à l'émission de l'impulsion.

Lorsque le transducteur 20 reçoit l'impulsion ultrasonore émise par le transducteur 18, il délivre un signal électrique à l'entrée de l'amplificateur à seuil 34. Lorsque le signal provenant du transducteur 20 dépasse le seuil VS, l'amplificateur 34 délivre un signal électrique sur une entrée du compteur 38, ce qui met fin au comptage. Le microprocesseur 30 relié à la sortie du compteur 30 détermine le temps de vol d'un impulsion ultrasonore entre le transducteur 18 et le transducteur 20.

Cette opération effectuée, une opération similaire est déclenchée avec le transducteur 20 émettant une impulsion ultrasonore détectée par le transducteur 18.

Grâce à la mesure de temps de vol dans le sens contraire, le microprocesseur détermine la vitesse d'écoulement du fluide, les autres paramètres nécessaires au calcul étant connus (en particulier les caractéristiques géométriques de l'ellipsoïde).

## Revendications

1. Dispositif de mesure de la vitesse d'un fluide circulant dans une conduite (10) comprenant une paire de transducteurs émetteurs/récepteurs d'ultrasons (18,20) et une chambre de mesure (16), caractérisé en ce que la chambre de mesure (16) possède une forme d'ellipsoïde de révolution réfléchissant les ultrasons, chacun des transducteurs émetteurs/récepteurs (18,20) étant positionné à un foyer (F1, F2) de l'ellipsoïde.

2. Dispositif selon la revendication 1, caractérisé en ce que l'ellipsoïde est tel que la somme des distances (d1,d2) d'un point (P) de l'ellipsoïde aux foyers (F1,F2) moins la distance (l) entre les foyers (F1,F2) est sensiblement égale à un multiple entier de la longueur d'onde ultrasonore.

3. Dispositif selon la revendication 1, caractérisé en ce que la chambre de mesure (16) possède une entrée (15) et une sortie (17) alignées sur le grand axe (a1) de l'ellipsoïde.

4. Dispositif selon la revendication 1, caractérisé en ce qu'il comprend une chambre d'entrée (14) raccordée à une entrée (15) de la chambre de mesure (16) et ayant une forme de tuyère convergente.

5. Dispositif selon la revendication 1, caractérisé en ce qu'il comprend une chambre de sortie (24) raccordée à une sortie (17) de la chambre de mesure (16) et ayant une forme de tuyère divergente.

6. Dispositif selon la revendication 1, caractérisé en ce que la chambre de mesure (16) comprend un obstacle (2) disposé longitudinalement selon le grand axe (a1) de l'ellipsoïde de manière à rendre la distribution transversale de vitesse du fluide parcourant la chambre de mesure (16) sensiblement constante quel que soit le débit à l'intérieur de la chambre de mesure (16).

7. Dispositif selon la revendication 6, caractérisé en ce que l'obstacle (2) possède une forme aérodynamique à symétrie cylindrique autour du grand axe (a1) de l'ellipsoïde.

8. Dispositif selon la revendication 7, caractérisé en ce que l'obstacle (2) possède une forme d'ogive ayant une section longitudinale ellipsoïdale telle que l'écartement entre la paroi de la chambre de mesure (16) et la majeure partie de la surface de l'obstacle (2) soit constant.

9. Dispositif selon la revendication 8, caractérisé en ce que l'ogive possède une extrémité effilée opposée à l'ouverture d'entrée (15).

10. Dispositif selon la revendication 6, caractérisé en ce que l'obstacle (2) est disposé de manière à masquer au moins chaque transducteur (18,20) pour les ondes ultrasonores émises sensiblement axialement par le transducteur opposé.

11. Dispositif selon la revendication 6, caractérisé en ce que l'obstacle (2) est maintenu en position dans la chambre de mesure (16) par un support (4) comprenant des ailettes profilées solidaires de la paroi de la chambre de mesure (16) par une extrémité et de l'obstacle par l'autre extrémité.

12. Dispositif selon la revendication 1, caractérisé en ce que les transducteurs (18,20) sont maintenus en position par des supports (22,23), ces supports étant des tranquilliseurs pour la circulation du fluide.

13. Dispositif selon la revendication 12, caractérisé en ce que chacun des tranquilliseurs (22,23) comprend plusieurs ailettes régulièrement espacées, disposées perpendiculairement au grand axe (a1) de l'ellipsoïde et fixées sur la paroi de la chambre de mesure (16).

14. Dispositif selon la revendication 1, caractérisé en ce que chaque transducteur (18,20) est enchâssé dans un boîtier de forme aérodynamique.

15. Dispositif selon la revendication 1, caractérisé en ce que le petit axe (a2) de l'ellipsoïde est sensiblement égal au diamètre (D) de la conduite (10) dans laquelle circule le fluide.

16. Dispositif selon la revendication 1, caractérisé en ce que la distance inter-foyers (l) est comprise dans une gamme allant de 4 à 6 fois le diamètre (D) de la conduite (10) dans laquelle circule le fluide.

## Patentansprüche

1. Vorrichtung zum Messen der Geschwindigkeit einer Flüssigkeit, die in einer Leitung (10) fließt, welche ein Paar Ultraschall-Sende/Empfänger-Wandler (18, 20) sowie eine Meßkammer (16) aufweist, dadurch gekennzeichnet, daß die Meßkammer (16) die Form eines die Ultraschallwellen reflektierenden Rotationsellipsoids hat, wobei jeder Sende/Empfänger-Wandler (18, 20) in einem Brennpunkt (F1, F2) des Ellipsoids angeordnet ist.

2. Vorrichtung nach Anspruch 1, dadurch gekennzeichnet, daß der Ellipsoid dergestalt ist, daß die Summe der Abstände (dl, d2) von einem Punkt (P) des Ellipsoids zu den Brennpunkten (F1, F2) abzüglich des Abstandes (1) zwischen den Brennpunkten(F1, F2) im wesentlichen gleich einem ganzzahligen Vielfachen der Ultraschallwellenlänge ist.

3. Vorrichtung nach Anspruch 1, dadurch gekennzeichnet, daß die Meßkammer (16) einen Eingang (15) und einen Ausgang (17) besitzt, die auf die große Achse (a1) des Ellipsoids ausgerichtet sind.

4. Vorrichtung nach Anspruch 1, dadurch gekennzeichnet, daß sie eine mit einem Eingang (15) der Meßkammer (16) verbundene Eingangskammer (14) enthält, welche die Form einer konvergierenden Düse aufweist.

5. Vorrichtung nach Anspruch 1, dadurch gekennzeichnet, daß sie eine mit einem Ausgang (17) der Meßkammer (16) verbundene Ausgangskammer (24) enthält, welche die Form einer divergierenden Düse aufweist.

6. Vorrichtung nach Anspruch 1, dadurch gekennzeichnet, daß die Meßkammer (16) ein in der Längsrichtung der großen Achse (a1) des Ellipsoids angeordnetes Hindernis (2) derart aufweist, daß die Querverteilung der Geschwindigkeit der die Meßkammer (16) durchfließenden Flüssigkeit - unabhängig von der Menge innerhalb der Meßkammer (16) - im wesentlichen konstant ist.

7. Vorrichtung nach Anspruch 6, dadurch gekennzeichnet, daß das Hindernis (2) eine Stromlinienform mit zylindrischer Symmetrie um die große Achse (a1) des Ellipsoids besitzt.

8. Vorrichtung nach Anspruch 7, dadurch gekennzeichnet, daß das Hindernis (2) eine Spitzbogenform mit ellipsoidischem Längsschnitt derart besitzt, daß der Abstand zwischen der Wand der Meßkammer (16) und dem Großteil der Oberfläche des Hindernisses (2) konstant ist.

9. Vorrichtung nach Anspruch 8, dadurch gekennzeichnet, daß der Spitzbogen ein der Eingangsöffnung (15) gegenüberliegendes spitz zulaufendes Ende aufweist.

10. Vorrichtung nach Anspruch 6, dadurch gekennzeichnet, daß das Hindernis (2) derart angeordnet ist, daß es wenigstens jeden Wandler (18, 20) gegen die im wesentlichen axial von dem gegenüberliegenden Wandler ausgesandten Ultraschallwellen abschirmt.

11. Vorrichtung nach Anspruch 6, dadurch gekennzeichnet, daß das Hindernis (2) in der Meßkammer (16) mittels eines Trägers (4) in Position gehalten wird, der Profilflügel aufweist, die durch ein Ende fest mit der Wand der Meßkammer (16) und mittels des anderen Endes fest mit dem Hindernis verbunden sind.

12. Vorrichtung nach Anspruch 1, dadurch gekennzeichnet, daß die Wandler (18, 20) durch Träger (22, 23) in Position gehalten werden, wobei diese Träger Beruhiger für die Zirkulation der Flüssigkeit sind.

13. Vorrichtung nach Anspruch 12, dadurch gekennzeichnet, daß jeder Beruhiger (22, 23) mehrere in gleichmäßigen Abständen voneinander befindliche Flügel aufweist, die senkrecht zu der großen Achse (a1) des Ellipsoids angeordnet und an der Wand der Meßkammer (16) befestigt sind.

14. Vorrichtung nach Anspruch 1, dadurch gekennzeichnet, daß jeder Wandler (18, 20) in einem stromlinienförmigen Gehäuse untergebracht ist.

15. Vorrichtung nach Anspruch 1, dadurch gekennzeichnet, daß die kleine Achse (a2) des Ellipsoids im wesentlichen dem Durchmesser (D) der Leitung (10) entspricht, in welcher die Flüssigkeit fließt.

16. Vorrichtung nach Anspruch 1, dadurch gekennzeichnet, daß der Abstand zwischen den Brennpunkten (1) das 4- bis 6fache des Durchmessers (D) der Leitung (10) beträgt, in welcher die Flüssigkeit fließt.

## Claims

1. A device for measuring the velocity of a fluid travelling through a pipe (10), comprising a pair of ultrasonic input-output transducers (18, 20) and a measurement chamber (16), characterized in that the measurement chamber (16) has the form of a revolution ellipsoid able to reflect ultrasounds, each of transducers (18, 20) being located at one of the focal points (F1, F2) of the ellipsoid.

2. A device according to claim 1, characterized in that the ellipsoid is such that the sum of distances (dl, d2) from a point (P) on the ellipsoid to focal points (F1, F2), minus distance (I) between the focal points (F1, F2), is practically equal to a multiple integer of the ultrasonic wave length.

3. A device according to claim 1, characterized in that the measurement chamber (16) has an intake (15) and an outlet (17) aligned with the ellipsoid major axis (a1).

4. A device according to claim 1, characterized in that it comprises an intake chamber (14), connected to an intake (15) of the measurement chamber (16) and having the shape of a converging nozzle.

5. A device according to claim 1, characterized in that it comprises an outlet chamber (24), connected to an outlet (17) of the measurement chamber (16) and having the shape of a diverging nozzle.

6. A device according to claim 1, characterized in that the measurement chamber (16) contains an obstacle (2) positioned longitudinally along the ellipsoid major axis (a1) in order to produce a practically constant transverse velocity distribution in the fluid crossing the measurement chamber (16), irrespective of the flow rate inside the measurement chamber (16).

7. A device according to claim 6, characterized in that the obstacle (2) has an aerodynamic shape with cylindrical symmetry about the major axis (a1) of the ellipsoid.

8. A device according to claim 7, characterized in that the obstacle (2) has an ogive shape with an ellipsoidal longitudinal section such that the distance between the wall of the measurement chamber (16) and the major part of the surface of the obstacle (2) is constant.

9. A device according to claim 8, characterized in that the ogive has a tapered end opposite the intake opening (15).

10. A device according to claim 6, characterized in that the obstacle (2) is positioned so as to mask at least each of the transducers (18, 20) to ultrasonic waves transmitted quasi-axially by the distant transducer.

11. A device according to claim 6, characterized in that the obstacle (2) is maintained in position in the measurement chamber (16) by a support (4) comprising a series of shaped vanes integral at one end with one wall of the measurement chamber (16) and at the other end with the obstacle (2).

12. A device according to claim 1, characterized in that the transducers (18, 20) are maintained in position by supports (22, 23) comprising means for streamlining the flow of the fluid.

13. A device according to claim 12, characterized in that each of the streamlining means (22, 23) comprises several equidistant vanes set perpendicular to the ellipsoid major axis (a1) and mounted to the wall of the measurement chamber (16).

14. A device according to claim 1, characterized in that the each of transducers (18, 20) is placed in an aerodynamically shaped module.

15. A device according to claim 1, characterized in that the ellipsoid minor axis (a2) of the ellipsoid is practically equal to the diameter (D) of the pipe (10) through which the fluid is flowing.

16. A device according to claim 1, characterized in that the inter-focal-point distance (I) lies in a range of between four and six times the diameter (D) of the pipe (10) through which the fluid is flowing.
